# EUROPEAN PATENT APPLICATION

(11) **EP 4 684 636 A1**
(43) Date of publication of application: **28.01.2026**
(21) Application number: 23928480.5
(22) Date of filing: 21.03.2023
(51) Int. Cl.: A01M 29/34, A01G 13/02

(54) **DEVICE FOR PROTECTING PLANTS AGAINST CRAWLING INSECTS OR SIMILAR ANIMAL PESTS**

(71) Applicant: Briz Grau, José, 46269 Tous Valencia (ES); Martorell Briz, Miguel, 46007 VALENCIA (Valencia) (ES); Ruz Martínez, José, 46269 Tous Valencia (ES)
(72) Inventor: Briz Grau, José, 46269 Tous Valencia (ES); Martorell Briz, Miguel, 46007 VALENCIA (Valencia) (ES); Ruz Martínez, José, 46269 Tous Valencia (ES)
(74) Representative: Capitán García, Maria Nuria
(86) International application number: PCT/ES2023/070179
(87) International publication number: WO 2024/194501

(57) **Abstract**

A protection device for plants against pests of climbing insects or like animals, comprising a fence element adapted, when in use, to be arranged perimetrically surrounding a stem or trunk of a plan, the fence element comprises a tubular wall, a first external projection forming a moat around the tubular wall, and a serrated lower end of the tubular wall adapted to be driven into and buried in a substrate in which the plant has been sown, such that the serrated lower end and the first outer projection form a first plant access limiting barrier for climbing insects or like animals, and the moat is adapted to contain a volume of water, such that said volume of water forms a second plant access limiting barrier for climbing insects or like animals.

## Description

### TECHNICAL FIELD OF THE INVENTION

The present invention falls within the sector of the art related to the control of pests, specifically, of climbing insects, such as ants and citrus mealybugs (*Planococcus citri*), or like animals, such as snails, which travel mainly on land and attack plants by climbing up their trunks and settling on their leaves and fruit, thereby damaging the plant's leaves and/or fruit, creating reservoirs that affect and destabilize the rural economy.

The invention is a protection device for plants against pests that travel mainly by land, which starting from the subsoil, combines a plurality of barriers that, in a completely environmentally friendly way, prevent the pests of these climbing insects or like animals from infesting and colonizing a plant to such an extent as to cause it to die or deteriorate, or else spoil its fruit intended for both human and animal consumption.

### BACKGROUND TO THE INVENTION

As is known, agriculture and the rural world are facing a range of invasive pests imported from third countries, and combined with current regulations that increasingly limit the use of truly effective (besides being expensive) plant protection products, these pests are very difficult to control, destabilising the rural economy and increasing the risk of survival of the inhabitants of rural areas.

One of these pests is the citrus mealybug (*Planococcus citri*), which has become one of the main 'nightmares' for farmers, affecting both citrus fruits and persimmons. Citrus mealybugs feed on the plant's sap and fruit and secrete a large amount of honeydew with a high sugar content. Saprophytic fungi develop on this layer of honeydew, forming a characteristic black felt-like layer colloquially known as 'sooty mould'. Fruit stained with sooty mould loses commercial quality, and when colonies form under the sepals, they mark and ripen the fruit prematurely. Controlling this pest is complicated, and at present there are no available control methods that are completely effective, leading to the carrying out of costly, repetitive plant protection treatments over the years, which produce abundant deposits of hazardous waste into the environment where they are applied and which frequently lead to insecticide resistance.

The pest control that has been mostly used is a chemical control, such as the use of pesticides, harmful substances and other toxic agents. The main drawback of such chemical control of agricultural and forestry pests is the extreme damage it causes to food for consumption and to the environment, negatively affecting both the soil itself and plants and other living beings, regardless of whether they are considered pests or not.

It would thus be desirable to have a preventative treatment that anticipates the affecting of the plant by the pest since, once it does, it often ends up affecting 100% of the fruit on the affected plants, ruining the entire harvest and affecting their commercialisation.

An environmentally friendly solution is also desirable, without having to request an authorisation for the use of currently prohibited or pheromone-based plant protection products, as the latter is a technique that significantly increases production costs. In other words, it is desirable to opt for natural alternative solutions which, for example, in conjunction with the release of beneficial fauna, such as the *Cryptolaemus* beetle (predator) or the *Anagyrus aberiae* wasp (parasitoid), would considerably reduce the use of costly, repetitive chemical treatments, with the consequent environmental benefit and a support for the weakest link in the food chain, the farmers themselves, thus contributing to savings in crop production costs and a reduction in pesticide residue on food and in the environment.

Therefore, it is an essential objective of this invention to address this need by means of the proposed protection device. It should be noted that the applicant is unaware of the existence of any other device or like invention with equivalent or similar technical, structural and constituent features.

### DESCRIPTION OF THE INVENTION

The present invention is set out and characterised in the independent claim, whereas the dependent claims describe other features thereof.

The object of the invention is a protection device for plants against pests of climbing insects, such as ants and citrus mealybugs, or other like animals, such as snails, wherein the protection device combines a plurality of barriers that prevent the passage of any of said pests to the trunk or the branches of the plant it protects.

The device comprises a fence element, which is adapted, when in use, to be arranged perimetrically surrounding a stem or trunk of a plant to be protected.

The fence element comprises a tubular wall, a first outer projection forming a moat around the tubular wall, and a serrated lower end of the tubular wall, the latter being adapted to be driven into and buried in a substrate subsoil where the plant has been sown, such that the serrated lower end and the first outer projection form a first plant access limiting barrier for climbing insects or like animals, and the formed moat is adapted to contain a volume of water, such that said volume of water forms a second plant access limiting for climbing insects or like animals.

Thus, control, in an efficient and completely harmless and environmentally friendly manner, of agricultural and forestry pests, such as ants or citrus mealybugs, as well as any other pests, especially those that travel primarily on land, is achieved.

### BRIEF DESCRIPTION OF THE FIGURES

The present specification is complemented with a set of figures, illustrative of the preferred example, and never limitative of the invention.
Fig. 1 depicts a top perspective view of the plant protection device.
Fig. 2 depicts a schematic front view of the plant protection device of Fig. 1.

### DETAILED DESCRIPTION OF THE INVENTION

The present invention is a plant protection device, which prevents the access and colonisation by pests of the plant it protects, combining a plurality of barriers that prevent the passage of any pests to the trunk or branches of the plant it protects. It is primarily conceived for the control of pests, especially those that travel on land, such as ants, citrus mealybugs, snails, etc.

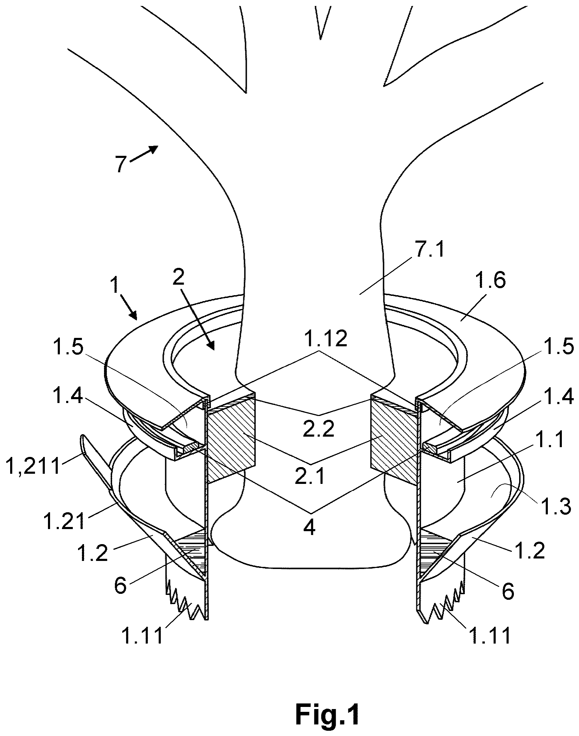

To this end, as shown in Fig. 1, the device comprises a fence element (1) adapted, when in use, to be arranged perimetrically surrounding a stem or trunk (7.1) of a plant (7), remaining separate from said stem or trunk (7.1), without said fence element (1) coming into contact with any part of the plant (7) to be protected. For example, the fence element (1) could be made of a semi-rigid plastic or bioplastic material. Likewise, the fence element (1) could be composed of a single part or else, advantageously, of at least two parts, and in this case, comprise fastening means (not shown in the Figures) configured to allow said parts to be coupled and uncoupled around the stem or trunk (7.1) of the plant (7).

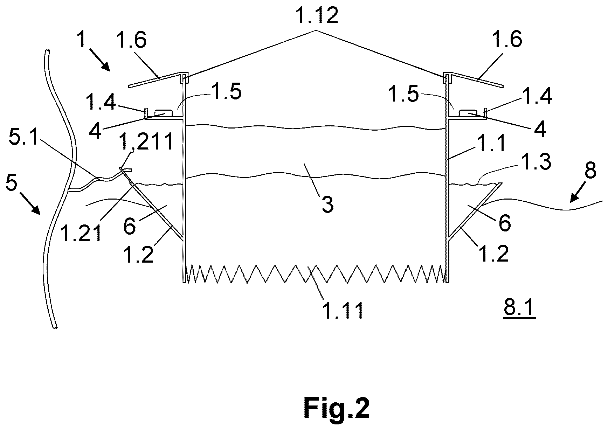

As shown in Fig. 2, the fence element (1) comprises:
- a tubular wall (1.1), e.g. with a circular cross-section;
- a first outer projection (1.2), which forms a moat (1.3) around the tubular wall (1.1); and
- a serrated lower end (1.11) of the tubular wall (1.1), which is adapted to be driven into and buried in the subsoil (8.1) of a substrate (8) where the plant (7) has been sown.

Preferably, the first outer projection (1.2) forms an inverted frustoconical surface on top of the serrated lower end (1.11) of the tubular wall (1.1), i.e. it is preferred that said first external projection (1.2) be an inclined perimeter wall that projects outwards and upwards (in the opposite direction to the substrate) from the tubular wall (1.1), as a surface continuation of the serrated lower end (1.11) of the tubular wall (1.1).

Thus, the serrated lower end (1.11) and the first outer projection (1.2) form a first plant access limiting (7) for climbing insects or like animals, for example, those arriving at the outside of the fence element (1) by travelling on the substrate (8) or else through its subsoil (8.1), and getting ready to climb up said outside of the fence element (1) [the outside of the serrated lower edge (1.11) and the first external projection (1.2)].

Likewise, the moat (1.3) formed by the first outer projection (1.2) is adapted to contain a volume of water (6), such that said volume of water (6) forms a second plant access limiting barrier (7) for climbing insects or like animals, for example, those that have managed to get past the first barrier, i.e. the verticality of the serrated lower end (1.11) of the tubular wall (1.1) and the outward and upward inclination of the inverted frustoconical surface formed by the first external projection (1.2).

Advantageously, an upper edge (1.21) of the first outer projection (1.2) may comprise a fastening means (1.211) for a microtube (5.1) connected to a controlled watering system (5) for the plant (7), such that the moat (1.3) may be periodically filled with water while the plant (7) is being watered, without the need for specific continuous maintenance of the second barrier.

On the other hand, the protection device could comprise one or several additional barriers selected from the group of barriers that will be described below, which, if existing, could be incorporated into the protection device in any possible combination thereof.

As shown in Fig. 1, the device may additionally comprise a watertight filling (2) composed of an expanded polyurethane foam (2.1) coated with a layer of resilient liquid waterproofing agent (2.2), e.g. the latter could be selected from the group consisting of a liquid silicone, liquid latex, chlorinated rubber, ethylene propylene diene monomer (EPDM) rubber, a liquid elastomeric resin and a liquid elastomeric polymer. Where the watertight filling (2) is adapted to be arranged between the tubular wall (1.1) of the fence element (1) and the stem or trunk (7.1) of the plant (7), i.e. completely closing off or covering the gap or separation existing between said tubular wall (1.1) and the stem or trunk (7.1) of the plant (7), such that it forms a third plant access limiting barrier (7) for climbing insects or like animals, for example, those that, travelling through the subsoil (8.1) of the substrate (8) underneath the serrated lower end (1.11) of the tubular wall (1.1), manage to reach the roots (not shown in the Figures) of the plant (7) and intend to climb up its stem or trunk (7.1) by climbing up said roots.

Additionally, as shown in Fig. 2, the protection device could comprise an adhesive tape (3) perimetrically affixed to the tubular wall (1.1) at a certain height above the moat (1.3), such that said adhesive tape (3) forms a fourth plant access limiting barrier (7) for climbing insects or like animals, for example, those that have managed to go past the second barrier, i.e. the volume of water (6) contained in the moat (1.3) surrounding the tubular wall (1.1).

In other words, with the adhesive tape (3) it is sought to form a trap configured so that the climbing insects or like animals that have managed to get past the second barrier and intend to cross over the adhesive tape (3) are trapped in it (stuck or adhered).

Additionally, the fence element (1) may comprise a second outer projection (1.4) forming a receptacle (1.5) around the tubular wall (1.1), where the receptacle (1.5) is adapted to contain an environmentally friendly repellent or insecticide medium (4), e.g. salt, bicarbonate or else diatomaceous earth, either in the form of tablets, granules or powder, such that said repellent or insecticide medium (4) forms a fifth plant access limiting barrier (7) for climbing insects or like animals, for example, those that have managed to get past the second barrier, i.e. the volume of water (6) contained in the moat (1.3) surrounding the tubular wall (1.1), or else, if the protection device comprises the additional fourth barrier described above, the fifth barrier will limit access to the plant (7) by the climbing insects or like animals that have managed to get past said fourth barrier, i.e. the adhesive tape (3) perimetrically affixed to the tubular wall (1.1) above the moat (1.3).

On the other hand, the fence element (1) may comprise a cover projection (1.6) extending outwards from an upper end (1.12) of the tubular wall (1.1), where said cover projection (1.6) is configured to cover the receptacle (1.5) formed by the second outer projection (1.4), such that the cover projection (1.6) is suitable for protecting the repellent or insecticide medium (4) contained in said receptacle (1.5) from inclement weather, such as sunlight and rain.

Advantageously, the cover projection (1.6) may be detachable with regard to the upper end (1.12) of the tubular wall (1.1), such that it facilitates the placing of the repellent or insecticide medium (4) in the receptacle (1.5). However, the cover projection (1.6) could likewise be built in the upper end (1.12) of the tubular wall (1.1), i.e. without the possibility of being removed from said upper end (1.2) of the tubular wall (1.1), either formed as an extension of the upper end (1.12) itself or formed separately and fixed to said upper end (1.12) without the possibility of being removed from the latter.

Thus, as can be seen, the protection device that is the object of the present invention is configured as a plurality of unsurmountable barriers (up to five possible barriers) around the plant (7) to be protected, which achieve an efficient, completely harmless and environmentally friendly control of agricultural and forestry pests, such as ants or citrus mealybugs, as well as any other pests, especially those that travel mainly by land.

## Claims

1. Protection device for plants against pests of climbing insects or like animals, **characterised in that** it comprises a fence element (1) adapted, when in use, to be arranged perimetrically surrounding a stem or trunk (7.1) of a plant (7), the fence element (1) comprises a tubular wall (1.1), a first outer projection (1.2) forming a moat (1.3) around the tubular wall (1.1), and a serrated lower end (1.11) of the tubular wall (1.1) adapted to be driven into and buried in the subsoil (8.1) of a substrate (8) wherein the plant (7) has been sown, such that the serrated lower end (1.11) and the first external projection (1.2) form a first plant access limiting barrier (7) for climbing insects or like animals, and the moat (1.3) is adapted to contain a volume of water (6), such that said volume of water (6) forms a second plant access limiting barrier (7) for climbing insects or like animals.

2. Device according to claim 1, comprising a watertight filling (2) composed of an expanded polyurethane foam (2.1) coated with a layer of a resilient liquid waterproofing agent (2.2), the watertight filling (2) is adapted to be arranged between the tubular wall (1.1) of the fence element (1) and the stem or trunk (7.1) of the plant (7), such that said watertight filling (2) forms a third plant access limiting barrier (7) for climbing insects or like animals.

3. Device according to claim 2, wherein the resilient liquid waterproofing layer (2.2) is selected from the group consisting of a liquid silicone, liquid latex, a chlorinated rubber, ethylene propylene diene monomer (EPDM) rubber, a liquid elastomeric resin and a liquid elastomeric polymer.

4. Device according to any of the preceding claims, comprising an adhesive tape (3) perimetrically affixed to the tubular wall (1.1) at a height above the moat (1.3), such that said adhesive tape (3) forms a fourth plant access limiting barrier (7) for climbing insects or like animals.

5. Device according to any of the preceding claims, wherein the fence element (1) comprises a second outer projection (1.4) forming a receptacle (1.5) around the tubular wall (1.1), where the receptacle (1.5) is adapted to contain a repellent or insecticide medium (4), such that said repellent or insecticide medium (4) forms a fifth plant access limiting barrier (7) for climbing insects or like animals.

6. Device according to claim 5, wherein the repellent or insecticide medium (4) is salt, bicarbonate or diatomaceous earth in the form of tablets, granules or powder.

7. Device according to claim 5, wherein the fence element (1) comprises a cover projection (1.6) extending outwards from an upper end (1.12) of the tubular wall (1.1) and configured to cover the receptacle (1.5) formed by the second outer projection (1.4), such that the cover projection (1.6) is suitable for protecting the repellent medium (4), which said receptacle (1.5) contains, from inclement weather.

8. Device according to claim 7, wherein the cover projection (1.6) is built in the upper end (1.12) of the tubular wall (1.1).

9. Device according to claim 7, wherein the cover projection (1.6) is detachable with regard to the upper end (1.12) of the tubular wall (1.1).

10. Device according to claim 1, wherein the fence element (1) is formed by at least two parts and comprises fasteners means configured to allow said pieces to be coupled and uncoupled around the stem or trunk (7.1) of the plant (7).

11. Device according to claim 1, wherein the fence element (1) is made of a semi-rigid plastic or bioplastic material.

12. Device according to claim 1, wherein the tubular wall (1.1) of the fence element (1) has a circular cross-section.

13. Device according to claim 1, wherein the first outer projection (1.2) forms an inverted frustoconical surface on the serrated lower end (1.11) of the tubular wall (1.1).

14. Device according to claim 1, wherein an upper edge (1.21) of the first outer projection (1.2) comprises a fastening means (1.211) for a microtube (5.1) connected to a watering system (5) of the plant, such that the moat (1.3) may be periodically filled with water while the plant (7) is being watered.

## Amended claims

### Amended claims under Art. 19.1 PCT

1. Protection device for plants against pests of climbing insects or like animals, comprising a fence element (1) adapted, when in use, to be arranged perimetrically surrounding a stem or trunk (7.1) of a plant (7), the fence element (1) comprises a tubular wall (1.1), a first outer projection (1.2) forming a moat (1.3) around the tubular wall (1.1), and a serrated lower end (1.11) of the tubular wall (1.1) adapted to be driven into and buried in the subsoil (8.1) of a substrate (8) wherein the plant (7) has been sown, such that the serrated lower end (1.11) and the first external projection (1.2) form a first plant access limiting barrier (7) for climbing insects or like animals, and the moat (1.3) is adapted to contain a volume of water (6), such that said volume of water (6) forms a second plant access limiting barrier (7) for climbing insects or like animals, an expanded polyurethane foam (2.1) is arranged between the tubular wall (1.1) of the fence element (1) and the stem or trunk (7.1) of the plant (7), **characterised in that** the expanded polyurethane foam (2.1) is coated with a layer of a resilient liquid waterproofing agent (2.2), wherein the expanded polyurethane foam (2.1) and the layer of resilient liquid waterproofing agent (2.2) compose a watertight filling (2), such that said watertight filling (2) forms a third plant access limiting barrier (7) for climbing insects or like animals.

2. Device according to claim 1, wherein the resilient liquid waterproofing layer (2.2) is selected from the group consisting of a liquid silicone, liquid latex, a chlorinated rubber, ethylene propylene diene monomer (EPDM) rubber, a liquid elastomeric resin and a liquid elastomeric polymer.

3. Device according to any of the preceding claims, comprising an adhesive tape (3) perimetrically affixed to the tubular wall (1.1) at a height above the moat (1.3), such that said adhesive tape (3) forms a fourth plant access limiting barrier (7) for climbing insects or like animals.

4. Device according to any of the preceding claims, wherein the fence element (1) comprises a second outer projection (1.4) forming a receptacle (1.5) around the tubular wall (1.1), where the receptacle (1.5) is adapted to contain a repellent or insecticide medium (4), such that said repellent or insecticide medium (4) forms a fifth plant access limiting barrier (7) for climbing insects or like animals.

5. Device according to claim 4, wherein the repellent or insecticide medium (4) is salt, bicarbonate or diatomaceous earth in the form of tablets, granules or powder.

6. Device according to claim 4, wherein the fence element (1) comprises a cover projection (1.6) extending outwards from an upper end (1.12) of the tubular wall (1.1) and configured to cover the receptacle (1.5) formed by the second outer projection (1.4), such that the cover projection (1.6) is suitable for protecting the repellent medium (4), which said receptacle (1.5) contains, from inclement weather.

7. Device according to claim 6, wherein the cover projection (1.6) is built in the upper end (1.12) of the tubular wall (1.1).

8. Device according to claim 6, wherein the cover projection (1.6) is detachable with regard to the upper end (1.12) of the tubular wall (1.1).

9. Device according to claim 1, wherein the fence element (1) is formed by at least two parts and comprises fasteners means configured to allow said pieces to be coupled and uncoupled around the stem or trunk (7.1) of the plant (7).

10. Device according to claim 1, wherein the fence element (1) is made of a semi-rigid plastic or bioplastic material.

11. Device according to claim 1, wherein the tubular wall (1.1) of the fence element (1) has a circular cross-section.

12. Device according to claim 1, wherein the first outer projection (1.2) forms an inverted frustoconical surface on the serrated lower end (1.11) of the tubular wall (1.1).

13. Device according to claim 1, wherein an upper edge (1.21) of the first outer projection (1.2) comprises a fastening means (1.211) for a microtube (5.1) connected to a watering system (5) of the plant, such that the moat (1.3) may be periodically filled with water while the plant (7) is being watered.
Differences between the claims as filed and the claims as amended:
- Claim 1 is amended by moving the technical features disclosed in D1 and D3 into its preamble, and its "characterizing" part is formed with the new content of original claim 2.
- Claim 2 has been deleted.
- Claim 3 is now claim 2, and it is dependent on claim 1.
- Claim 4 is now claim 3.
- Claim 5 is now claim 4.
- Claim 6 is now claim 5, and it is dependent on claim 4.
- Claim 7 is now claim 6, and it is dependent on claim 4.
- Claim 8 is now claim 7, and it is dependent on claim 6.
- Claim 9 is now claim 8, and it is dependent on claim 6.
- Claim 10 is now claim 9.
- Claim 11 is now claim 10.
- Claim 12 is now claim 11.
- Claim 13 is now claim 12.
- Claim 14 is now claim 13.
Here below are enclosed the claims as amended where modifications of claims as filed can be followed as:
- text deleted as filed is crossed out,
- text added as amended is underlined.
